# EUROPÄISCHE PATENTSCHRIFT

(11) **EP 1 123 823 B1**
(45) Veröffentlichungstag und Bekanntmachung des Hinweises auf die Patenterteilung: **12.12.2007**
(21) Anmeldenummer: 00128468.6
(22) Anmeldetag: 23.12.2000
(51) Int. Cl.: B60H 1/22

(54) **Energieerzeuger für Rad- und Kettenfahrzeuge zum Einsatz in arktischen Klimazonen**
Power generator for a wheeled or tracked vehicle to be used in arctic climatic areas
Générateur d'énergie pour un véhicule à roues ou à chenilles pour utilisation dans des régions climatiques arctiques

(30) Priorität: 11.02.2000 DE 10006077
(43) Veröffentlichungstag der Anmeldung: 16.08.2001
(73) Patentinhaber: Rheinmetall Landsysteme GmbH, 24107 Kiel (DE)
(72) Erfinder: Kühl, Manfred, 24229 Schwedeneck (DE); Schmitt, Josef, 24229 Dänischenhagen (DE); Schmich, Georg, 24109 Kiel (DE)
(74) Vertreter: Dietrich, Barbara

(56) Entgegenhaltungen:
- DE-C- 940 024
- US-A- 2 321 579
- US-A- 4 424 775
- US-A- 4 611 466
- US-A- 4 756 359

## Beschreibung

Die Erfindung betrifft eine Vorrichtung zum Aufheizen eines militärischen Rad- und Kettenfahrzeuges, nach den im Oberbegriff des Patentanspruches 1 angegebenen Merkmalen.

Die Erfindung bezieht sich beispielhaft auch auf gepanzerte Fahrzeuge, die unter extremen Umweltbedingungen wie sehr tiefen Temperaturen ständig oder nach einer Stillstandszeit sehr schnell wieder einsatzbereit sein sollen. Dabei ergibt sich nicht nur das Problem, daß übliche Starterbatterien bei tiefen Temperaturen sehr hohe Leistungs- und Kapazitätsverluste aufweisen sondern die Fahrzeugelektronik ist ebenfalls nicht einsatzfähig, so daß Batterien aufgewärmt und -geladen und Fahrzeugkomponenten geheizt werden müssen. Nach einer Stillstandszeit wird mit den üblichen Warmwasserheizgeräten, die Abwärme des Motors oder ein zusätzliches Heizgerät verwenden, eine lange Zeitspanne benötigt für das Wiederaufwärmen. Für die einzelnen Funktionen zur Herstellung der Einsatzbereitschaft wird die zusätzliche Bereitstellung von Heizwärme und von elektrischem Strom für zum Beispiel das Nachladen der Starterbatterien benötigt.
Eine besondere Bedeutung hat dies für den operativen Einsatzfall bei militärischen Fahrzeugen. Um solche Fahrzeugsysteme bei extrem tiefen Temperaturen betriebsbereit zu halten oder in Betrieb zu nehmen, müssen für die installierten Elektronikkomponenten und die zum Antrieb erforderliche Verbrennungskraftmaschine spezifizierte Betriebsbedingungen hergestellt werden, so das eine sichere Betriebsfunktion immer aufrechterhalten oder aber zur Wiederinbetriebnahme hergestellt werden kann.

Üblicherweise erfordern die eingebauten Komponenten wie Motor und Fahrzeugelektronik eine Vorwärmung auf eine Bauteiltemperatur zwischen 0 und -25°C. Dieses macht den Einsatz einer Vorwärmung zwingend erforderlich.

Alle bisher bekannten Vorwärmsysteme wie Standheizungen für Luft- und Wasserkreisläufe benötigen zum Betrieb der Pumpen und Gebläse elektrische Energie, die eine entsprechend große Auslegung der fahrzeugeigenen Batterien erfordern. Dazu kommt der Zielkonflikt, das die verfügbare Batteriekapazität mit fallender Batterietemperatur immer weiter abnimmt, dagegen die zum sicheren Motorstart erforderliche Batteriekapazität mit fallender Motortemperatur immer weiter ansteigt. Dies macht den Einbau entsprechend großer Batterieanlagen zwingend notwendig.

Nach dem Stand der Technik sind verschiedene Ausbildungen für Heizgeräte und Energieerzeuger vorgeschlagen worden.
In der DE 3303578 wird eine Gasturbineneinheit zur Energieerzeugung für ein Kettenfahrzeug beschrieben, die als Einschubmodul im Heck des Fahrzeugs eingebaut ist.
In der DE 3402618 wird eine Fahrzeugklimaanlage benannt, bei der eine kleine Gasturbine die erforderliche komprimierte Luft liefert und ein Luftkreislauf bei den besonderen Bedingungen an die Luftreinheit gebildet wird.

In der DE 19823621 wird für eine Fahrzeugklimaanlage der Einsatz einer Wärmepumpe vorgeschlagen, die mit den Abgasen vom Motor betrieben wird.
In der DE 19745167 wird der Einsatz einer Stirlingmaschine insbesondere für ein Elektrofahrzeug vorgeschlagen, womit elektrische Energie über einen Generator und Wärme- oder Kälteleistung über einen Wärmetauscher für den Fahrgastraum bereitgestellt wird entsprechend der Betriebsweise der Maschine als Motor oder Wärmepumpe und ohne weitere Komponenten für die Heizung oder Klimatisierung des Fahrgastraums.
Aus Veröffentlichungen bekannt ist auch eine Auxiliary Power Unit (APU) mit einer Turbine, die der Bereitstellung von elektrischer Energie oder pneumatischer Energie für Flugzeugstartgeräte unter Verwendung des Abgasstroms dient.

Aus der DE 940 024 C sind ein gattungsgemäßes Heizverfahren und -vorrichtung, insbesondere für Brennkraftmaschinen bekannt, welche für tiefe Temperaturen oder schwierige Witterungsverhältnisse Einsatz finden. Dabei wird Frischluft durch einen durch eine Gasturbine angetriebenen Turboverdichter angesaugt und vor verdichtet. Danach wird dieses in einer dem Verdichter nach geschalteten Brennkammer erhitzt, in der Gasturbine dann teilweise entspannt und nach dem Verlassen der Turbine als Anwärmluft verwendet.

Die Aufgabe der Erfindung besteht darin, bestehende Anordnungen zu verbessern und für Landfahrzeuge, insbesondere gepanzerte Kettenfahrzeuge, die auch in arktischen Klimazonen mit Temperaturen unterhalb von mehr als -30°C zum Einsatz kommen, den Vorgang der Inbetriebsetzung und des sicheren Motorstarts in kurzer Zeit und mit einfachen Mitteln durchzuführen. Weiterhin sollen die für eine Vorwärmung und Energieerzeugung erforderlichen Bauteile nur einen geringen Einbauraum erfordern, sowohl fest im Fahrzeug einbaubar und mit geringem Aufwand demontierbar und möglichst universell nutzbar sein.

Diese Aufgabe wird erfindungsgemäß durch die kennzeichnenden Merkmale des Anspruchs 1 gelöst. Vorteilhafte Ausgestaltungen der Erfindung offenbaren die Merkmale der Unteransprüche.

Die erzielten Vorteile bestehen insbesondere darin, daß
- Eine kompakte Bauweise eines bekannten Energieerzeugers mit hoher Energiedichte (thermisch, elektrisch und mechanisch)vorliegt, die die benötigte elektrische und thermische Energie bereitstellt.
- Der Einsatzbereich auch von bereits in der Nutzung befindlichen Fahrzeugen bis auf die arktische Klimazone erweitert werden kann durch nachträgliche Ausrüstung mit der Vorrichtung.
- Die Vorrichtung universell nutzbar ist. Zusätzlich zur Wärmeerzeugung dient sie zur Erzeugung elektrischer Energie mittels des an die Turbine angekoppelten Generators. Weiterhin können über zusätzliche PTO's (= Power take off) eines an die Turbine angekoppelten Getriebes zum Beispiel Hydraulikpumpen und Klimaanlagen angetrieben werden.
- Eine Nachrüstung von vorhandenen Fahrzeugen in der Regel mit geringem Aufwand möglich ist
- Eine mobile Variante, die extern an das Fahrzeug anschließbar oder von außen auf das Fahrzeug anzubauen ist, ebenfalls ausgeführt werden kann.
- Ein spezielles geregeltes Batteriebeheizungssystem die Batterieladefähigkeit der Fahrzeugbatterie laufend sicherstellt oder aber wieder herstellt.

Die Erfindung soll das Startverhalten von Rad- und Kettenfahrzeugen bei Einsätzen in Klimazonen mit Umwelttemperaturen unterhalb - 30°C verbessern. Die Erfindung nutzt das Prinzip der aus dem Flugzeugbau bekannten Hilfsgasturbine als Auxiliary-Power-Unit (APU) zur Erzeugung von thermischer und elektrischer Energie.

Eine Gasturbine arbeitet bekanntermaßen mit einem hohen Luftdurchsatz bei einem gegenüber Kolbenmotoren schlechteren thermodynamischen Wirkungsgrad. Üblicherweise entweicht die im Abgas enthaltene Energie ungenutzt ins Freie. Im vorliegenden Erfindungsfall werden die heißen Abgase der Gasturbine direkt dem Fahrzeug zugeführt um primär mit dieser thermischen Energie die kalten Teile der fahrzeugeigenen Antriebskomponenten im Triebwerksraum wie Motor, Getriebe und Elektronikbauteile in kurzer Zeit auf eine zur Inbetriebsetzung notwendige Mindesttemperatur zu erwärmen. Mittels eines im Abgasrohr installierten, einstellbaren oder geregelten Ejektors wird dem Abgas Frischluft zugemischt, so daß die relativ hohe Abgastemperatur nach der Turbine reduziert werden kann und eine örtliche Überhitzung von Bauteilen vermieden wird.

Damit keine toxischen Gase vom Triebwerksraum in den Bedienerraum gelangen, ist der Triebwerksraum hermetisch vom Bedienerraum abgetrennt.
Mit der heißen Zapfluft oder Bleedluft, die Luft, die nach der Verdichterstufe der Turbine entnommen wird, die keine toxischen Gase enthält, wird sekundär der Bedienerraum auf eine ergonomisch annehmbare Temperatur erwärmt.

Die hier vorgesehene Gasturbine hat den Vorteil, dass sie aufgrund ihrer Bauart auch bei sehr tiefen Umgebungstemperaturen bis -55°C ohne besondere Maßnahmen gestartet werden kann und zum Start nur eine vergleichsweise geringere Energie/ Batteriekapazität benötigt. Dieser Energieanteil für den Startvorgang der Gasturbine kann aus einer zusätzlichen autonomen Batterie abgegeben werden.
Dies ist für den mobilen autarken Einsatz von immens wichtiger Bedeutung, da sich aufgrund der Temperaturgegebenheiten die verfügbare Batteriekapazität überproportional verringert.
Anschließend läuft die APU mit eigenem Antrieb nur durch Zufuhr von Kraftstoff aus dem fahrzeugeigenen Kraftstoffvorrat. Weitere Fremdenergie muss nicht zugeführt werden. Durch den eingebauten Generator wird elektrische Energie erzeugt, die dem Bordnetz und damit den Batterien des Fahrzeuges zugeführt wird.

Durch den von der APU angetriebenen Generator kann die Batterieanlage des Fahrzeugs kleiner ausgeführt werden. In der Vorwärmphase werden die durch die Tieftemperatur teilentladenen Batterien wieder geladen. Weiterhin besteht die Möglichkeit, bei entsprechender Dimensionierung des Generators, auch entfernt angeordnete Bauteile durch elektrische Energie statt durch die heißen Abgase der APU vorzuwärmen. Außerdem unterstützt die Generatorleistung der APU den Startvorgang des Verbrennungsmotors.

Zur universellen Ausnutzung der eingebauten Gasturbine ist auch der aus anderen Einsatzfällen bekannte Betrieb einer APU zur Ergänzung des eingebauten Hauptantriebsmotors vorgesehen. Hierdurch kann der bei bestimmten Einsatzmissionen betriebswirtschaftlich ungünstige Leerlaufbetrieb des Hauptantriebsmotors nur zur Erzeugung von einer im Verhältnis zur Motorleistung geringen Bordnetzleistung entfallen und durch die in diesem Einsatzfall betriebswirtschaftlich günstiger arbeitende APU erfolgen.

Ausführungsbeispiele der Erfindung sind in den Zeichnungen schematisch dargestellt und werden im-folgenden näher beschrieben. Es zeigen:

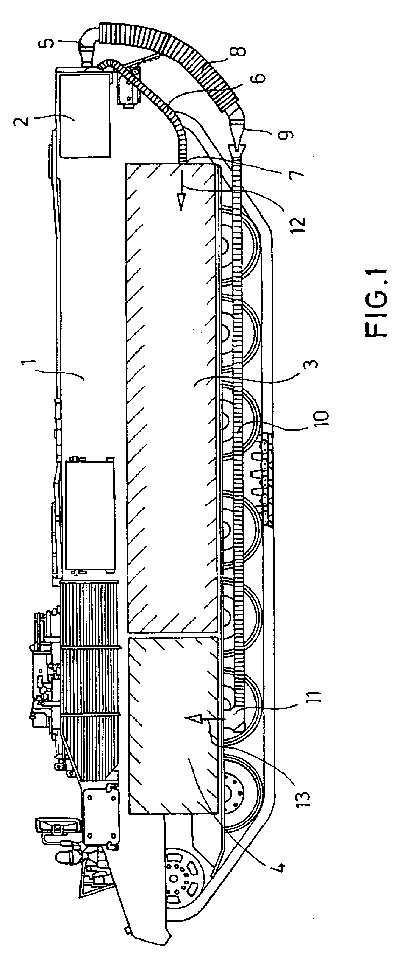

- Figur 1:: eine Seitenansicht des Fahrzeuges, teilweise in Schnittdarstellung

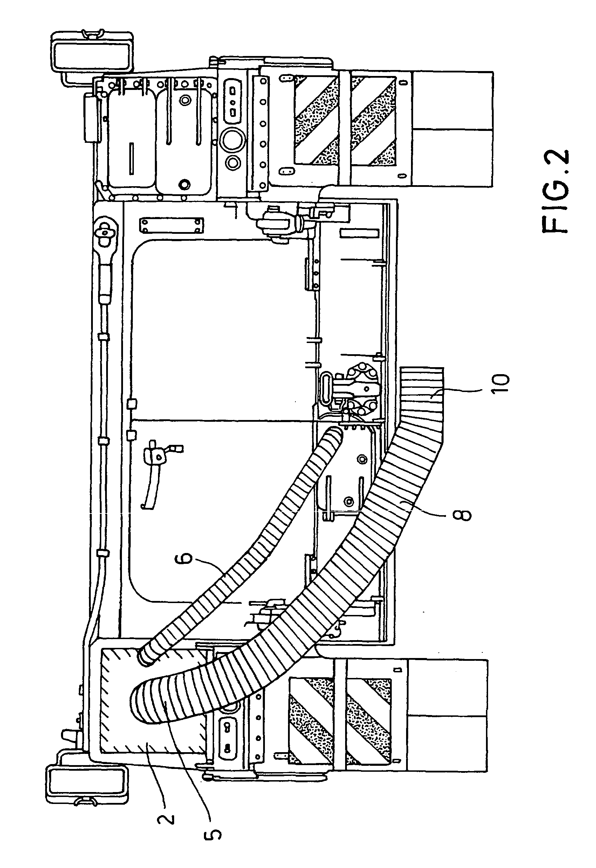

- Figur 2:: das Fahrzeug gemäß Fig. 1 in einer Ansicht von hinten
- Figur 3:: ein Schema des Energieerzeuger-Aufbaues
- Figur 4:: ein Schema der Batterieheizung

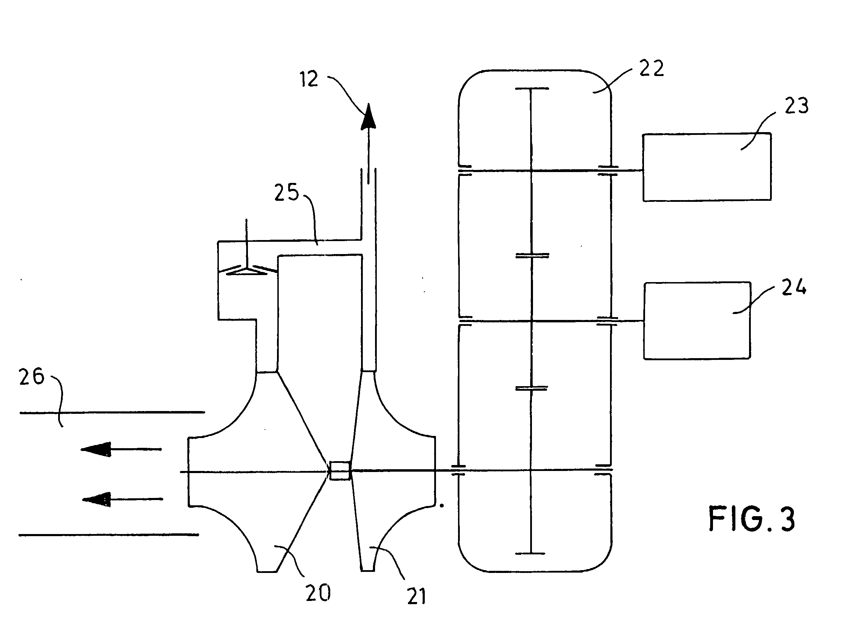

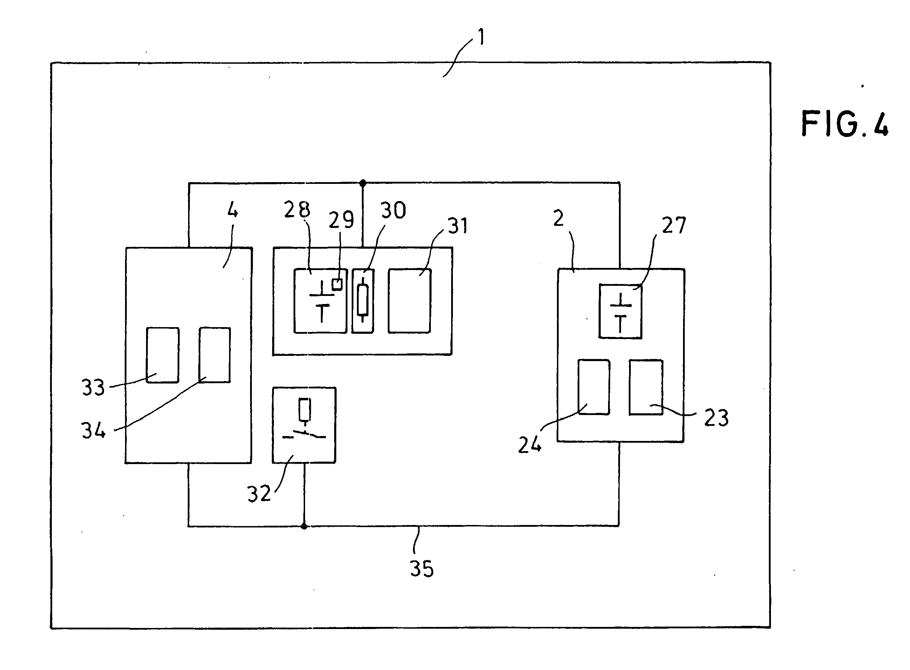

An einem Fahrzeug 1 ist am Heck ein Energieerzeuger 2 mit einer Gasturbine und elektrischem Generator angebaut. Die Zapfluft 12 aus der Verdichterstufe der Turbine wird mittels eines Schlauchs 6 zu einem Anschluß 7 am Mannschaftsraum 3 geführt, um den Mannschaftsraum aufwärmen zu können. Der Abgasanschluß 5 am Energieerzeuger 2 wird mit einem Schlauch 8 verbunden und das Abgas 13 über eine Ejektordüse 9 und über einen weiteren Schlauch oder Rohr 10 bis zu einem Anschluß 11 unten am Motorraum 4 geführt, um den Motorraum aufwärmen zu können. Das Abgas kann über Öffnungen oben am Motorraum wieder austreten (nicht dargestellt).
Der schematische Aufbau (Figur 3) des Energieerzeugers zeigt die Turbine 20 und den Verdichter 21 auf einer gemeinsamen Welle, an die auch das Getriebe 22 mit dem elektrischen Generator 23 und der Anlasser 24 für die Turbine angeschlossen ist. Die vom Verdichter erzeugte Druckluft wird als Brennluft 25 der Turbine zugeführt und ein Teilstrom wird als Zapfluft 12, die am Energieerzeuger mittels Schlauch 6 abgenommen wird, zur Verfügung gestellt. Das durch Verbrennung in der Turbine erzeugte Abgas 26 wird an Anschluß 5 am Energieerzeuger zur Verfügung gestellt. In Figur 4 wird das Schema für die elektrische Batterieheizung und -überwachung dargestellt.lm Fahrzeug 1 sind der Energieerzeuger 2 mit seinen Komponenten Generator 23, Anlasser 24 und Starterbatterie 27 gezeigt sowie der Motorraum 4 mit Anlasser 33 und Generator 34 am Fahrzeugmotor. Die Batterieladesteuerung 32 überwacht den Ladezustand der Fahrzeugbatterie 28 und veranlaßt bei Erfordernis ihre Aufladung mittels Energieerzeuger 2. Ein Batterie-Temperatursensor 29 überwacht die Fahrzeugbatterie 28 bezüglich ihrer Temperatur und schaltet entsprechend den Vorgaben der Batterie-Heizungssteuerung 31 die Batterieheizung 30 ein oder aus, die von der Fahrzeugbatterie 28 selbst oder vom Energieerzeuger 2 und Generator 23 gespeist werden kann. Alle Einbauteile sind mit elektrischen Leitungen 35 verbunden. Im Falle, daß der Motor 4 mit dem angetriebenen Generator 34 im Betrieb läuft, wird die Heizung und Aufladung der Fahrzeugbatterie 28 mittels Generator 34 entsprechend den Vorgaben der Ladesteuerung 32 und der Heizungssteuerung 31 vorgenommen. Die Starterbatterie 27 des Energieerzeugers kann mittels des eigenen Generators 23 oder mittels des Generators 34 aufgeladen werden.

### Bezugszeichenliste

1) Fahrzeug
2) Energieerzeuger
3) Mannschaftsraum
4) Motorraum
5) Abgasanschluß
6) Schlauch
7) Abgasanschluß
8) Schlauch
9) Ejektordüse
10) Schlauch/ Rohr
11) Anschluß
12) Zapfluft
13) Abgas
20) Gasturbine
21) Verdichter
22) Getriebe
23) elektrischer Generator
24) Anlasser
25) Brennluft
26) Abgas
27) Startbatterie
28) Fahrzeugbatterie
29) Temperatursensor
30) Batterieheizung
31) Batterieheizungsstörung
32) Batterieladesteuerung
33) Anlasser
34) Generator
35) elektrische Leitungen

## Patentansprüche

1. Vorrichtung zum Aufheizen eines militärischen Rad- und Kettenfahrzeuges (1), beispielsweise eines Panzers, der aus einem Rad- und Kettenfahrwerk, einem Fahrzeuggehäuse mit Antriebsmotor und Getriebe und sonstigen Einbauten für den Betrieb des Fahrzeuges besteht, für die Verwendung bei tiefen Temperaturen, mit einem zusätzlichen kleinen Energieerzeuger (2) auf dem Fahrzeug (1), um das Starten des Antriebsmotors und die Funktion der sonstigen Komponenten bei einer geeigneten Aufwärmtemperatur in einer kurzen Zeit zu erreichen, wobei der Energieerzeuger (2) als Gasturbine (20) Warmluft (12) mittels eines Verdichters (21) an der Turbine (20) für den Besatzungsraum (3) im Fahrzeug (1) erzeugt und der Abgasstrom (13, 26) der Turbine (20) über eine Rohrleitung (10) in den Motorraum (4) zur Aufwärmung des Motorraums (4) geführt wird, **dadurch gekennzeichnet, dass** als zusätzlicher Energieerzeuger (2) auf dem Fahrzeug (1) eine Gasturbine (20) oder Auxiliary Power Unit verwendet wird, die einen elektrischen Generator (23) enthält und antreibt für die zusätzliche Versorgung des Fahrzeugs (1) mit elektrischem Strom.

2. Vorrichtung nach Anspruch 1, **dadurch gekennzeichnet, daß** der Energieerzeuger (2) mittels eines Rahmengestells oder Einschubs mit dem Fahrzeug (1) lösbar und auswechselbar integriert ist.

3. Vorrichtung nach einem der Ansprüche 1 bis 2, **dadurch gekennzeichnet, daß** die Versorgungsanschlüsse für den Energieerzeuger für elektrischen Strom und Kraftstoff mittels Schnelltrennkupplungen zum Fahrzeug (1) verbunden sind und die sogenannte Bleedluft oder Zapfluft der Gasturbine (20), die am Verdichter (21) der Turbine abgenommen wird, als Warmluft (12) mittels Schnelltrennleitungen zum Besatzungsraum (3) geführt wird.

4. Vorrichtung nach einem der Ansprüche 1 bis 3, **dadurch gekennzeichnet, daß** der Abgasstrom (13) mittels geeigneten Rohr- und Schlauchleitungen (8; 10) in den unteren Motorraum (4) leitbar und an der Oberseite des Motorraums (4) durch Öffnungen nach außen führbar ist.

5. Vorrichtung nach Anspruch 4, **dadurch gekennzeichnet, daß** der Abgasstrom (13) vor Eintritt in den Motorraum (4) über eine Ejektordüse (9) geführt wird, so daß eine Beimischung von Außenluft in den Abgasstrom (13) zum Motorraum (4) erfolgt.

6. Vorrichtung nach Anspruch 4, **dadurch gekennzeichnet, daß** der Abgaskanal (8; 10) zwischen Gasturbine (20) und Motorraum (3) fest im Fahrzeug (1) integriert oder lösbar am Fahrzeug montiert oder lose neben dem Fahrzeug verlegt ist, wobei dann eine temporäre Anwendung des Abgasstroms (13) nur bei stehendem Fahrzeug erfolgt.

7. Vorrichtung nach einem der Ansprüche 1 bis 6, **dadurch gekennzeichnet, daß** der zusätzliche Energieerzeuger (2) ein zusätzliches Heizgerät neben den im Fahrzeug (1) vorhandenen Heiz- und Klimaeinrichtungen ist.

8. Vorrichtung nach einem der Ansprüche 1 bis 7, **dadurch gekennzeichnet, daß** der zusätzliche Energieerzeuger (2) als elektrischer Stromerzeuger bei Absinken der elektrischen Spannung der Fahrzeugbatterien (28) mit der Turbine (20) automatisch gestartet wird und damit die Fahrzeugbatterien (28) erwärmt und wieder auflädt und anschließend nach dem Aufladen wieder abgeschaltet wird.

9. Vorrichtung nach Anspruch 8, **dadurch gekennzeichnet, daß** der Energieerzeuger (2) mit Turbine (20) eine eigene Starterbatterie (30) enthält eingebaut hat für ein vom Bordnetz des Fahrzeugs unabhängiges Starten der Turbine.

10. Vorrichtung nach Anspruch 8, **dadurch gekennzeichnet, daß** für die Zeit des Fahrzeugstillstandes bei stehendem Motor oder auch während des Fahrzeugbetriebes die Ladefähigkeit und das Aufwärmen der Fahrzeugbatterie durch eine elektrische oder sonstige Heizung mittels Energiezuführung aus dem Energieerzeuger (2) und/ oder aus der Fahrzeugbatterie (28) sichergestellt wird, wobei Temperatursensoren (29) an den Batteriepolen in Verbindung mit einer Heizungssteuerung (32) die Temperaturerhöhung der Fahrzeugbatterie (28) regeln und der Energieerzeuger (2) je nach Zustand der Fahrzeugbatterie (28) gestartet wird und die Erwärmung und Aufladung übernimmt.

## Claims

1. Device for heating a military wheeled and crawler vehicle (1), for example a tank, which is composed of a wheeled and crawler running gear, a vehicle housing with drive motor and gearbox and other installations for operating the vehicle, for use at low temperatures, having an additional small power generator (2) on the vehicle (1) for starting the drive motor and carrying out the function of the other components at a suitable warm-up temperature within a short time, wherein the power generator (2) generates, as a gas turbine (20), heated air (12) by means of a compressor (24) on the turbine (20) for the crew compartment (3) in the vehicle (1), and the exhaust gas stream (13, 26) from the turbine (20) is directed via a pipeline (10) into the engine compartment (4) in order to heat up the engine compartment (4), **characterized in that** a gas turbine (20) or auxiliary power unit is used as an additional power generator (2) on the vehicle (1), said gas turbine (20) containing an electric generator (23) and driving said generator (23) in order to additionally supply the vehicle (1) with electric current.

2. Device according to Claim 1, **characterized in that** the power generator (2) is integrated into the vehicle (1) in a releasable and replaceable fashion by means of a frame rack or sliding module.

3. Device according to one of Claims 1 to 2, **characterized in that** the supply connections for the power generator for electric current and fuel are connected to the vehicle (1) by means of rapid release couplings, and what is referred to as the bleed air of the gas turbine (20) which is extracted at the compressor (21) of the turbine is directed to the crew compartment (3) as heated air (12) by means of quick release lines.

4. Device according to one of Claims 1 to 3, **characterized in that** the exhaust gas stream (13) can be fed into the lower engine compartment (4) by means of suitable pipe and hose lines (8; 10) and directed to the outside through openings on the upper side of the engine compartment (4).

5. Device according to Claim 4, **characterized in that** before the exhaust gas stream (13) enters the engine compartment (4) it is directed via an ejector nozzle (9) so that outside air is mixed into the exhaust gas stream (13) which is flowing to the engine compartment (4).

6. Device according to Claim 4, **characterized in that** the exhaust gas duct (8; 10) between the gas turbine (20) and the engine compartment (4) is permanently integrated in the vehicle (1) or mounted in a releasable fashion on the vehicle or laid loosely next to the vehicle, wherein temporary application of the exhaust gas stream (13) occurs only when the vehicle is stationary.

7. Device according to one of Claims 1 to 6, **characterized in that** the additional power generator (2) is a supplementary heating unit in addition to the heating and air conditioning devices present in the vehicle (1).

8. Device according to one of claims 1 to 7, **characterized in that** the supplementary power generator (2) is started automatically as a generator of electrical power with the turbine (20) when the electrical voltage of the vehicle batteries (28) drops, and it therefore heats up and recharges the vehicle batteries (28) and is subsequently switched off again after the charging process.

9. Device according to Claim 8, **characterized in that** the power generator (2) with turbine (20) contains a separate starter battery (30) for the turbine to be started independently of the on-board power system of the vehicle.

10. Device according to Claim 8, **characterized in that** for the time when the vehicle is in the stationary state with the engine stationary or else while the vehicle is operating, the loading capacity and the heating of the vehicle battery are ensured by an electrical heater or some other heater by a supply power from the power generator (2) and/or from the vehicle battery (28), wherein temperature sensors (29) at the battery poles regulate the increase in temperature of the vehicle battery (28) in conjunction with a heater controller (32), and the power generator (2) is started dependent on the state of the vehicle battery (28) and it carries out the heating and charging.

## Revendications

1. Dispositif pour chauffer un véhicule militaire à roues ou à chenilles (1), par exemple un blindé, qui se compose d'un mécanisme de roulement à roues et chenilles, d'un corps de véhicule avec un moteur d'entraînement et une boîte de vitesses ainsi que d'autres éléments incorporés pour le fonctionnement du véhicule, pour l'utilisation à basses températures, comprenant un petit générateur d'énergie supplémentaire (2) sur le véhicule (1), pour réaliser le démarrage du moteur d'entraînement et le fonctionnement des autres composants à une température de chauffage appropriée en un temps court, le générateur d'énergie (2) produisant, en tant que turbine à gaz (20), de l'air chaud (12) au moyen d'un compresseur (21) sur la turbine (20), pour l'habitacle (3) dans le véhicule (1), et le courant de gaz d'échappement (13, 26) de la turbine (20) étant guidé par le biais d'une conduite tubulaire (10) dans le compartiment moteur (4) pour chauffer le compartiment moteur (4), **caractérisé en ce que** l'on utilise comme générateur d'énergie supplémentaire (2) sur le véhicule (1) une turbine à gaz (20) ou une unité de puissance auxiliaire qui contient un générateur électrique (23) et le fait fonctionner pour l'alimentation supplémentaire du véhicule (1) en courant électrique.

2. Dispositif selon la revendication 1, **caractérisé en ce que** le générateur d'énergie (2) est intégré de manière amovible et remplaçable au moyen d'une structure de cadre ou d'un insert dans le véhicule (1).

3. Dispositif selon l'une quelconque des revendications 1 ou 2, **caractérisé en ce que** les raccords d'alimentation pour le générateur d'énergie pour le courant électrique et le carburant sont connectés au véhicule (1) au moyen de raccords à déconnexion rapide et l'air dit de purge ou de prise de la turbine à gaz (20), qui est prélevé sur le compresseur (21) de la turbine, est guidé sous forme d'air chaud (12) au moyen de conduites à déconnexion rapide jusqu'à l'habitacle (3).

4. Dispositif selon l'une quelconque des revendications 1 à 3, **caractérisé en ce que** le courant de gaz d'échappement (13) peut être conduit au moyen de conduites tubulaires et flexibles appropriées (8 ; 10) dans le compartiment moteur inférieur (4) et peut être guidé vers l'extérieur à travers des ouvertures au niveau du côté supérieur du compartiment moteur (4).

5. Dispositif selon la revendication 4, **caractérisé en ce que** le courant de gaz d'échappement (13) est guidé avant l'entrée dans le compartiment moteur (4) par le biais d'une buse d'éjecteur (9), de sorte qu'un mélange de l'air extérieur dans le courant de gaz d'échappement (13) allant au compartiment moteur (4) ait lieu.

6. Dispositif selon la revendication 4, **caractérisé en ce que** le canal de gaz d'échappement (8 ; 10) est intégré fixement dans le véhicule (1) entre la turbine à gaz (20) et le compartiment moteur (4) ou bien est monté de manière amovible sur le véhicule ou bien est posé lâchement à côté du véhicule, et dans ce cas une application temporaire du courant de gaz d'échappement (13) a lieu uniquement lorsque le véhicule est à l'arrêt.

7. Dispositif selon l'une quelconque des revendications 1 à 6, **caractérisé en ce que** le générateur d'énergie supplémentaire (2) est un appareil de chauffage en plus des installations de chauffage et de conditionnement d'air se trouvant dans le véhicule (1).

8. Dispositif selon l'une quelconque des revendications 1 à 7, **caractérisé en ce que** le générateur d'énergie supplémentaire (2) est démarré automatiquement avec la turbine (20) en tant que générateur de courant électrique en cas de chute de tension électrique des batteries du véhicule (28), réchauffe et recharge ainsi les batteries du véhicule (28) et ensuite le générateur d'énergie est à nouveau arrêté après la charge.

9. Dispositif selon la revendication 8, **caractérisé en ce que** le générateur d'énergie (2) avec la turbine (20) contient sa propre batterie de démarrage (30) pour un démarrage de la turbine indépendant du réseau de bord du véhicule.

10. Dispositif selon la revendication 8, **caractérisé en ce que**, pendant la durée d'arrêt du véhicule lorsque le moteur est à l'arrêt ou également pendant le fonctionnement du véhicule, la capacité de charge et le réchauffement de la batterie du véhicule sont assurés par un chauffage électrique ou autre au moyen d'un apport énergétique depuis le générateur d'énergie (2) et/ou depuis la batterie du véhicule (28), des capteurs de température (29) au niveau des pôles de la batterie, en liaison avec une commande du chauffage (32) régulant l'augmentation de la température de la batterie du véhicule (28) et le générateur d'énergie (2) étant démarré en fonction de l'état de la batterie du véhicule (28) et assurant le réchauffement et la charge.
